# EUROPÄISCHE PATENTSCHRIFT

(11) **EP 1 760 951 B1**
(45) Veröffentlichungstag und Bekanntmachung des Hinweises auf die Patenterteilung: **05.08.2009**
(21) Anmeldenummer: 06090150.1
(22) Anmeldetag: 29.08.2006
(51) Int. Cl.: H04L 12/40, B60R 21/01

(54) **Kontextabhängiges Kommunikationssystem und Kommunikationsverfahren**
System and method for context-dependent communication
Système et méthode de communication dépendant du contexte

(30) Priorität: 06.09.2005 DE 102005042386
(43) Veröffentlichungstag der Anmeldung: 07.03.2007
(73) Patentinhaber: Volkswagen AG, 38436 Wolfsburg (DE)
(72) Erfinder: Gläser, Stefan, 38104 Braunschweig (DE); Höwing, Frank, 38173 Dettum (DE); Winter, Christian, 38118 Braunschweig (DE)
(74) Vertreter: Patentanwälte Bressel und Partner

(56) Entgegenhaltungen:
- DE-C1- 19 609 076
- US-B1- 6 396 164
- JONG HEE KANG ET AL: "River: an infrastructure for context dependent, reactive communication primitives" MOBILE COMPUTING SYSTEMS AND APPLICATIONS, 2003. PROCEEDINGS. FIFTH IEEE WORKSHOP ON 9-10 OCT. 2003, PISCATAWAY, NJ, USA,IEEE, 9. Oktober 2003 (2003-10-09), Seiten 77-86, XP010662877 ISBN: 0-7695-1995-4

## Beschreibung

Die Erfindung betrifft ein kontextabhängiges Kommunikationssystem mit mehreren Komponenten, die untereinander Informationen austauschen können, wobei das Austauschen der Informationen zwischen den Komponenten über eine Logik beschränkt ist, und ein Kommunikationsverfahren zum Austauschen von Informationen zwischen den miteinander verknüpften Komponenten, wobei das Austauschen der Informationen mittels der Logik beschränkt ist, umfassend die Schritte: Überprüfen der auszutauschenden Informationen gegen die Logik, um zu ermitteln, ob das Austauschen gemäß der Beschränkung durch die Logik gestattet ist; Austauschen der Informationen, sofern das Austauschen gestattet ist. Ferner betrifft die Erfindung eine Komponente eines genannten Kommunikationssystems.

Kommunikationssysteme und Kommunikationsverfahren der eingangs genannten Art werden in vielen Bereichen der Technik, insbesondere in Kraftfahrzeugen, angewendet. Moderne Kraftfahrzeuge verfügen über mehrere Komponenten, die miteinander Informationen austauschen. Neben den Komponenten, die beispielsweise Steuergeräte sein können, die ein Fahrzeughersteller in das Fahrzeug integriert, werden heutzutage zusätzlich beim Betrieb des Kraftfahrzeugs häufig Komponenten in das Kommunikationssystem eingebunden, die nicht vom Fahrzeughersteller stammen und zum ausgelieferten Kraftfahrzeug gehören. Solche nachträglich eingebundenen Komponenten umfassen u.a. Mobiltelefone, mp3-Player oder andere Infotainment-Vorrichtungen.

Bei einer Integration solcher Komponenten in ein Kommunikationssystem eines Fahrzeugs ist es notwendig, dass die Kommunikation geregelt und kontrolliert abläuft. Beispielsweise ist es nicht wünschenswert, dass mobile Komponenten, die in das Kommunikationssystem eingebunden werden, sämtliche Daten von sicherheitsrelevanten Komponenten des Fahrzeugs, beispielsweise eines Motorsteuergeräts, auslesen können oder Informationen, die Steuerbefehle enthalten können, an diese übermitteln können. Daher ist im Stand der Technik vorgesehen, dass eine Logik des Kommunikationssystems den Austausch von Informationen zwischen den Komponenten des Kommunikationssystems überwacht. Die Informationen zwischen den einzelnen Komponenten werden in der Regel in Form von Nachrichten ausgetauscht. Eine Nachricht umfasst in der Regel eine Angabe über die Komponente, an die die Nachricht gerichtet ist, eine Angabe, die den Ursprung der Nachricht, d.h. die aussendende Komponente, angibt, und Nutzlastinformationen. Mit Hilfe der Logik bei bekannten Kommunikationssystemen wird anhand der Ziel- und Ursprungsinformationen der Nachrichten geprüft, ob das Austauschen der Nachrichten, d.h. der Informationen, insbesondere Nutzlastinformationen, zulässig ist. Eine inhaltliche Kontrolle findet nicht statt.

Im Stand der Technik ist die Logik in der Regel dezentral verteilt auf den einzelnen Komponenten ausgebildet. Bei der Herstellung der einzelnen Komponenten wird die Logik festgelegt, d.h. festgelegt, mit welchen Komponenten eine Kommunikation in Form eines Austauschens von Informationen stattfinden darf. Da heutzutage zum Zeitpunkt der Konstruktion der Komponenten eines Fahrzeugs nicht absehbar ist, welche zusätzlichen Komponenten während des Betriebs des Fahrzeugs in das Kommunikationssystem eingebunden werden sollen und welche Funktionalität diese Komponenten aufweisen werden, ist es wünschenswert, die Logik anpassbar zu gestalten. Bei den bekannten Systemen kann die Logik der Komponenten nachträglich nicht oder nur sehr schwer verändert werden, indem beispielsweise die gesamte Steuerungssoftware durch ein Softwareupdate (flashen) ersetzt wird. Aufgrund der großen Datenmengen, die zum Flashen sämtlicher Steuergeräte in einem Fahrzeug übertragen werden müssen, dauern Fahrzeugwartungen bereits heute häufig mehrere Stunden, in denen lediglich digitale Daten auf die Komponenten eines Fahrzeugs übertragen werden.

Bei den bekannten Systemen ist darüber hinaus nur vorgesehen, die Kommunikation zwischen zwei Komponenten entweder zuzulassen oder zu unterbinden. Eine inhaltliche Überprüfung, welche Dateninhalte übertragen werden, ist nicht vorgesehen.
Insbesondere für neue in das Kommunikationssystem einzubindende Komponenten, deren Funktionalitäten zum Zeitpunkt der Konstruktion der in das Fahrzeug fest integrierten Komponenten nicht bekannt sind, ist es daher schwierig oder unmöglich, im Voraus eine Logik für die Kommunikation mit diesen neuen Komponenten festzulegen.

Mit dem Einbinden immer weiterer Komponenten, die zum Teil große Datenmengen über das Kommunikationssystem austauschen wollen, ist es wünschenswert, dass eine Kommunikation kontext- oder situationsabhängig verändert werden kann.

In den Dokumenten US 6 396 164 B1, DE 196 09 076 C1 sowie der Veröffentlichung von Jong Hee Kang et al. "River: an infrastructure for context dependent, reactive communication primitives" Mobile Computing Systems and Applications, 2003, Proceedings, Fifth IEEE Workshop on 9-10 Oct. 2003, Piscataway, NJ, USA, IEEE, 9. Oktober 2003 (2003-10-09, Seiten 77-86, ISBN: 0-7695-1995-4 sind weitere Kommunikationssysteme beschrieben.

Der Erfindung liegt das technische Problem zugrunde, ein verbessertes Kommunikationssystem, eine Komponente eines solchen Kommunikationssystems und ein Kommunikationsverfahren zu schaffen, die ein einfaches Einbinden von neuen Komponenten sowie ein verbessertes Informationsaustauschverhalten beim Betrieb des Kommunikationssystems ermöglichen.

Das technische Problem wird erfindungsgemäß durch ein Kommunikationssystem mit den Merkmalen des Patentanspruchs 1 und ein Kommunikationsverfahren mit den Merkmalen des Patentanspruchs 13 sowie eine Komponente mit den Merkmalen des Patentanspruchs 28 gelöst. Vorteilhafte Ausgestaltungen der Erfindung ergeben sich aus den Unteransprüchen.

Der Erfindung liegt der Gedanke zugrunde, dass die Logik in Abhängigkeit eines Zustands des Kommunikationssystems veränderbar ausgestaltet wird. Hierzu ist insbesondere für das Kommunikationssystem eingangs genannter Art vorgesehen, dass die Logik in Abhängigkeit eines Zustands des Kommunikationssystems veränderbar ist. Ferner wird ein Kommunikationsverfahren eingangsgenannter Art geschaffen, bei dem die Logik in Abhängigkeit eines Zustands des Kommunikationssystems verändert wird. Eine erfindungsgemäße Komponente eines Kommunikationssystems zum Austauschen von Informationen mit anderen Komponenten des Kommunikationssystems umfasst erfindungsgemäß eine Sende/Empfangseinheit zum Senden und/oder Empfangen von Informationen, eine lokale Logikeinheit zum Prüfen der auszusendenden und/oder zu empfangenden Informationen gegen eine Logik, wobei die lokale Logikeinheit das Austauschen von Informationen mit den anderen Komponenten gemäß der Überprüfung gegen die Logik beschränkt, wobei die Logik in Abhängigkeit eines Zustands des Kommunikationssystems veränderbar ist. Die Logik kann während der Laufzeit des Kommunikationssystems an einen Kontext angepasst werden, der durch den Zustand des Kommunikationssystems vorgegeben ist. Ein Zustand des Kommunikationssystems im Sinne der Erfindung wird durch die Zustände der einzelnen Komponenten des Kommunikationssystems sowie gegebenenfalls Zustände eines Übertragungssystems zwischen den Komponenten festgelegt. Hierbei werden nur die einen Zustand kennzeichnenden Merkmale einer Komponente berücksichtigt, die von außen wahrnehmbar sind. Dies bedeutet, dass eine innere Zustandsänderung einer Komponente, beispielsweise eine Änderung eines Betriebszustands von einem aktiven Zustand in einen Standby-Zustand nur dann eine Änderung des Zustands des Kommunikationssystems herbeiführen kann, wenn die Komponente diese Änderung dem Kommunikationssystem in Form von Informationen oder sonstigen Signalen zur Verfügung stellt. Ändert sich beispielsweise der Zustand eines Verstärkers für eine Audiowiedergabe vom aktiven Zustand in den Standby-Zustand, und teilt der Verstärker (die Verstärkerkomponente) dem Kommunikationssystem dies beispielsweise in Form von Informationen mit, so ist es wünschenswert, dass andere Komponenten, beispielsweise ein CD-Player, das Übermitteln von Informationen, die wiederzugebende Audiodaten einer CD umfassen, an den Verstärker einstellt. Hierdurch kann die Belastung mit zu übertragenden Informationen in dem Kommunikationssystem deutlich gesenkt werden. Ein Austauschen dieser Informationen zwischen dem CD-Player und dem Verstärker kann bei dem erfindungsgemäßen Kommunikationssystem durch ein Verändern der Logik unterbunden werden. In einem anderen Zustand des Kommunikationssystems, in dem sich der Verstärker im aktiven Zustand befindet, muss die Logik das Austauschen dieser Informationen zwischen dem CD-Player und dem Verstärker zulassen, damit eine Wiedergabe der CD im Fahrzeug möglich ist. Eine Zustandsänderung eine Komponente kann auch über irgendein Signal, beispielsweise ein elektrisches, optisches oder elektromagnetisches Signal, angezeigt werden.

Bei einem erfindungsgemäßen Kommunikationssystem ist vorgesehen, dass die Logik in Form eines Filters mit einem oder mehreren Filtereinträgen ausgebildet ist, wobei die Filtereinträge die Beschränkung des Austauschens der Informationen festlegen. Im oben genannten Beispiel kann beispielsweise in einem Zustand des Kommunikationssystems, in dem sich der Verstärker im Standby-Zustand befindet, ein Filtereintrag ein Austauschen von Audioinformationen mit dem Verstärker untersagen. In diesem Zustand kann das Kommunikationssystem jedoch einen Austausch von Steuerinformationen zwischen dem CD-Player und dem Verstärker gleichwohl zulassen, so dass ein Austauschen der Information, dass ein Fahrer eine Abspieltaste des CD-Players betätigt hat, zu dem Verstärker übermittelbar ist, so dass dieser von dem Standby-Zustand in einen aktiven Zustand wechselt. Ist dieser Wechsel des inneren Zustands des Verstärkers von außen wahrnehmbar, so wird der Zustand des Kommunikationssystems verändert. Bei dieser Veränderung kann die Logik des Kommunikationssystems verändert werden, indem beispielsweise der Filtereintrag, der ein Austauschen von Audioinformationen mit dem Verstärker unterbindet, entfernt wird.

Erfindungsgemäß umfasst der Filter der Logik dezentrale, in den einzelnen Komponenten angeordnete Komponentenfilter. Komponentenfilter selber können in Software oder in programmierbaren Logikschaltkreisen ausgebildet sein.

Bei einer besonders bevorzugten Ausführungsform der Erfindung umfasst die Logik ein Regelwerk, anhand dessen die Filtereinträge des Filters in Abhängigkeit von dem Zustand des Kommunikationssystems veränderbar sind. In dem obigen Beispiel könnte das Regelwerk beispielsweise eine Regel des Inhalts umfassen, dass ein Filtereintrag zu setzen ist, der das Austauschen von Audiodaten mit dem Verstärker unterbindet, wenn der Verstärker sich im Standby-Zustand befindet. Unter Verändern von Filtereinträgen wird im Rahmen der Erfindung jede Änderung der Filtereinträge, insbesondere in Hinzufügen eines Filtereintrags, ein Löschen bzw. Streichen eines Filtereintrags, ein Modifizieren eines Filtereintrags usw., verstanden.

Vorteilhafterweise ist bei einem erfindungsgemäßen Kommunikationssystem der Zustand des Kommunikationssystems mittels der ausgetauschten Informationen beeinflussbar. Eine besonders bevorzugte Ausführungsform dieser Erfindung sieht vor, dass mittels eines Zustandsanalysators der Zustand des Kommunikationssystems abbildbar ist, wobei die ausgetauschten Informationen mittels des Zustandsanalysators analysierbar sind und anhand des Inhalts der ausgetauschten Informationen Zustandsvariablen veränderbar sind, wobei die Gesamtheit der Zustandsvariablen den Zustand des Kommunikationssystems charakterisiert. In dem oben angeführten Beispiel kann eine Änderung des Zustands des Kommunikationssystems somit auch anhand des Austauschens von Steuerbefehlen mit dem Verstärker festgestellt werden, die einen Übergang des Verstärkers in den Standby-Zustand oder den aktiven Zustand bewirken. Hierdurch wird eine sehr flexible Logik ermöglicht. Wird beispielsweise eine neue Komponente in das Kommunikationssystem eingebunden, so kann anhand von Informationen, die diese Komponente über das Kommunikationssystem austauscht, festgestellt werden, dass diese neue Komponente in das Kommunikationssystem eingebunden wurde. Hierdurch ändert sich der Zustand des Kommunikationssystems, und auf diese Änderung kann durch ein Anpassen der Logik reagiert werden.

Eine bevorzugte Weiterbildung des Kommunikationssystems sieht vor, dass der Filter mindestens einen aktiven Filtereintrag umfasst, mit Hilfe dessen die ausgetauschten Informationen veränderbar sind. Ist in das Kommunikationssystem eines Fahrzeugs beispielsweise ein Mobiltelefon eingebunden, so werden die akustischen Signale in der Regel über ein Audiosystem des Fahrzeugs über die im Fahrzeug eingebauten Lautsprecher wiedergegeben. In einer Situation, in der der Fahrer jedoch ein Headset nutzt, um beispielsweise während der Fahrt Gedanken in ein Diktiergerät zu diktieren, erweist es sich als vorteilhaft, wenn das Klingeln des Mobiltelefons bei einem eingehenden Anruf nicht über die Lautsprecher des Fahrzeugs, sondern über das Headset wiedergegeben werden. Ein aktiver Filtereintrag ermöglicht es nun, dass Audiodaten, die für eine Wiedergabe an das Audiosystem zur Wiedergabe über die Lautsprecher gesendet werden, so verändert werden, dass sie an das Headset gerichtet sind.

Eine weitere Ausführungsform der Erfindung sieht vor, dass die Logik abhängig von einer konkreten Situation veränderbar ist. Insbesondere ist vorgesehen, dass ein Situationsanalysierer, der mit einer Sensorik zum Erfassen eines Fahrzeugzustand eines Fahrzeugs und/oder eines Fahrerzustands und/oder einer Fahrsituation des Fahrzeugs verknüpft ist und eine Prioritätseinheit umfasst, wobei mittels der Prioritätseinheit den Informationen und/oder den Filtereinträgen Prioritätsinformationen in Abhängigkeit von dem Fahrzeugzustand und/oder dem Fahrerzustand und/oder der Fahrsituation und/oder einer Aktion, die mittels der Informationen ausgelöst werden soll, zuordenbar sind. Wird beispielsweise über an den Rädern des Fahrzeugs montierte Sensoren festgestellt, dass sich das Fahrzeug mit einer hohen Geschwindigkeit bewegt, und anhand von Radarsensoren festgestellt, dass sich in der Umgebung des Fahrzeugs eine Reihe anderer Objekte mit hoher Geschwindigkeit bewegen, sowie beispielsweise mittels in das Lenkrad integrierter Sensoren festgestellt, dass der Fahrer eine hohe Pulsfrequenz aufweist, und beispielsweise ein Fahrtrichtungsanzeiger des Fahrzeugs betätigt ist, um einen Spurwechsel einzuleiten, so kann es in einer solchen Situation vorteilhaft sein, wenn eine allgemein informative Ansage einer Mensch-Maschine-Schnittstelle nicht über das Audiosystem ausgegeben wird, da sie die Konzentration des Fahrers stört. Den Informationen der Mensch-Maschine-Schnittstelle wird somit eine Prioritätsinformation zugeordnet, die eine niedrige Priorität aufweist. Einer Sprachmeldung des Navigationssystems, die ankündigt, dass die aktuell befahrene Straße in einer kurzen Distanz relativ zum gegenwärtigen Fahrzeugstandort verlassen werden soll, kann hingegen eine höhere Priorität in Form einer Prioritätsinformation zugeordnet werden, so dass diese trotz der hohen Anspannung, die für den Fahrer bei einem Spurwechsel bei dichtem Verkehr und hoher Geschwindigkeit herrscht, dennoch ausgegeben wird. Die Filtereinträge in den entsprechenden Komponenten können so gesetzt werden, dass nur die Informationen mit einer höheren Priorität zwischen den Komponenten ausgetauscht werden, so dass nur die Ansage des Navigationssystems wiedergegeben wird. Eine Aktion im Sinne der Erfindung ist in diesem Fall beispielsweise die Wiedergabe der Audioinformationen. Aktionen können jedoch beliebige Vorgänge sein, z. B. das Anzeigen eines Texts oder einer Grafik auf einem Display, das Ändern des internen Zustands einer Komponente (beispielsweise ein Ein- oder Ausschalten) usw. Ebenso wie den Informationen können auch den Filtereinträgen Prioritätsinformationen zugeordnet werden. Hierdurch wird eine Priorisierung der Logik kontextabhängig verändert.

Alternativ oder zusätzlich zu den dezentralen, in den einzelnen Komponenten angeordneten Komponentenfiltern kann der Filter einen Zentralfilter umfassen.

Das Verändern der Logik in Abhängigkeit vom Zustand des Kommunikationssystems erfolgt anhand eines Regelwerks. Das Regelwerk umfasst Regeln, die eine Prämisse und eine Maßnahme umfassen, wobei die Prämisse jeweils eine logische Bedingung umfasst, und mittels einer Inferenzeinheit nur die Regeln des Regelwerks auswertbar sind, in deren Prämisse eine der Zustandsvariablen ausgewertet wird, die mit der Änderung des Zustands des Kommunikationssystems verknüpft sind. Hierdurch ist eine einfache und schnelle Anpassung der Filtereinträge der Logik möglich. Ändert sich der Zustand des Kommunikationssystems, so werden eine oder mehrere Zustandsvariablen des Kommunikationssystems verändert. Ein Verändern der Zustandsvariablen erfolgt, indem ihnen ein Wert zugewiesen wird. Die Logik wird anschließend mit Hilfe einer Inferenzeinheit an den neuen Zustand des Kommunikationssystems angepasst, indem die Regeln des Regelwerks ausgewertet werden. Es werden in der Regel nur die Regeln ausgewertet, bei denen beim Auswerten der logischen Bedingung der Prämisse eine der Zustandsvariablen ausgelesen wird, die mit der Änderung des Zustands des Kommunikationssystems verknüpft sind. Ist die Prämisse, die eine logische Bedingung umfasst, wahr, so wird als Ergebnis (Konklusion) eine Maßnahme ausgeführt. Diese Maßnahme kann beispielsweise das Verändern eines Filtereintrags umfassen. Daher sieht eine besonders bevorzugte Ausgestaltung des Kommunikationssystems vor, dass als Maßnahme einer Regel, wenn die Prämisse erfüllt ist, ein Verändern der Filtereinträge ausführbar ist. Das Verändern der Filtereinträge erfolgt bei einer besonders vorteilhaften Ausführungsform der Erfindung mittels eines Austauschens von Informationen. Dies bedeutet, dass an die Komponente, deren Komponentenfilter verändert werden soll, Informationen gesandt werden, die die Komponente veranlassen, den Komponentenfilter zu ändern.

Die in den Unteransprüchen angegebenen Merkmale des Kommunikationsverfahrens und der Komponente für ein erfindungsgemäßes Kommunikationssystem weisen die gleichen Vorteile wie die entsprechenden Merkmale des erfindungsgemäßen Kommunikationssystems auf.

Nachfolgend wird die Erfindung anhand von bevorzugten Ausführungsbeispielen unter Bezugnahme auf eine Zeichnung näher erläutert. Hierbei zeigen:
- Fig. 1: ein Kommunikationssystem und eine zugehörige Logik, die jeweils als Zustandsmaschinen dargestellt sind;
- Fig. 2: ein Kommunikationssystem und seine Logik in einer Matrixdarstellung;
- Fig. 3 und 4: schematische Ansichten eines Kommunikationssystems mit einem zentralen Kommunikationskoordinator;
- Fig. 5: eine schematische Ansicht eines Kommunikationssystems mit dezentraler Kommunikation;
- Fig. 6: eine schematische Ansicht eines Kommunikationssystems zur Erläuterung von einer Logik, die Filtereinträge mit Prioritäten umfasst;
- Fig. 7: eine schematische Darstellung eines Kommunikationssystems mit einem Situationsanalysator; und
- Fig. 8: ein Ablaufdiagramm eines Kommunikationsverfahrens.

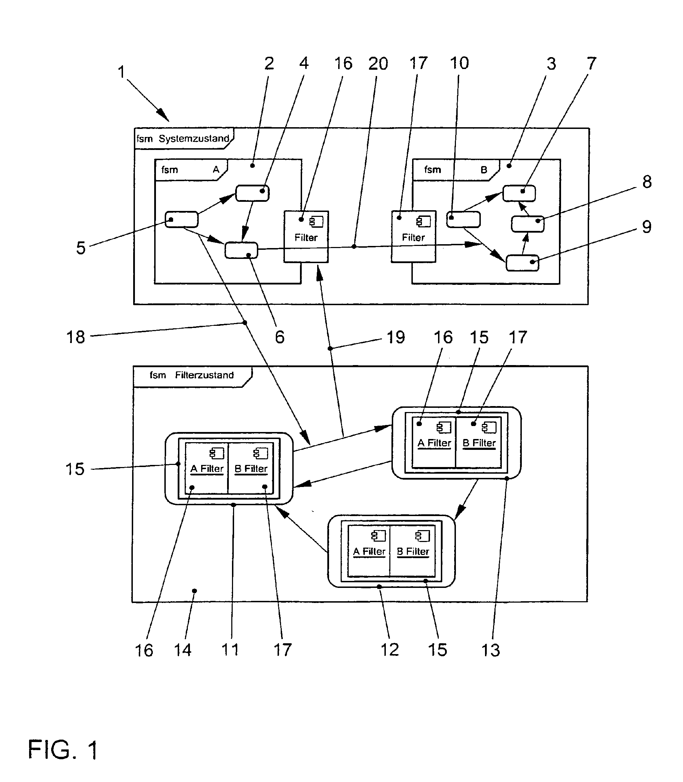

Fig. 1 zeigt ein Kommunikationssystem 1 als Zustandsmaschine (fsm - finite state machine). Das Kommunikationssystem 1 umfasst eine Komponente 2 (fsm A) und eine weitere Komponente 3 (fsm B). Die Komponente 2 und die weitere Komponente 3 können jeweils unterschiedtiche Zustände annehmen, die mit Hilfe von Rechtecken mit abgerundeten Ecken 4-6 für die Komponente 2 und 7-10 für die weitere Komponente 3 dargestellt sind. Die jeweils aktuellen Zustände 6 für die Komponente 2 und 10 für die weitere Komponente 3 sind durch Fettdruck hervorgehoben. Ein Zustand des Kommunikationssystems 1 ist jeweils durch die aktuellen Zustände 6, 10 der Komponente 2 und der weiteren Komponente 3 festgelegt. Zu unterschiedlichen Zuständen des Kommunikationssystems 1 korrespondieren Zustände 11, 12, 13 einer Logik 14, die ebenfalls als Zustandsmaschine beschrieben werden kann. Die Logik 14 bzw. die Zustände 11 bis 13 der Logik 14 sind in Form eines Filters 15 ausgebildet. Der Filter 15 umfasst jeweils für die Komponente 2 und die weitere Komponente 3 einen Komponentenfilter 16 bzw. 17. Der Filter 15 bzw. die Komponentenfilter 16 und 17 umfassen jeweils Filtereinträge, die festlegen, welche Informationen zwischen der Komponente 2 und der weiteren Komponente 3 ausgetauscht werden können. Somit legt die Logik 14 bzw. der Filter 15 bzw. die Komponentenfilter 16 und 17 bzw. deren Filtereinträge die Begrenzung für das Austauschen von Informationen zwischen der Komponente 2 und der weiteren Komponente 3 fest. Bei einer Änderung des Zustands des Kommunikationssystems 1 wird die Logik 14 bzw. die Filtereinträge der Komponentenfilter 16 und/oder 17 verändert. Geht beispielsweise die Komponente 2 von ihrem Zustand 5 in den Zustand 6 über, so sendet sie Informationen in Form einer Nachricht, die mittels eines Pfeils 18 dargestellt ist, aus. Ein Zustandsanalysator (nicht dargestellt) bildet die Nachricht auf eine Zustandsvariable ab. Hierdurch wird die Änderung des Zustands der Komponente 2 wahrnehmbar. Der Zustandsanalysator kann auch andere, nicht zum Austauschen im Kommunikationssystem 1 vorgesehene Informationen und Signale auswerten, um den Zustand des Kommunikationssystems 1 festzustellen. In der Logik ist festgelegt, dass diese sich bei dieser Änderung des Zustands des Kommunikationssystems 1 ebenfalls ändern soll. Die Änderung erfolgt, indem Filtereinträge des Komponentenfilters 16 der Komponente 2 verändert werden, wie dies mittels des Pfeils 19 angedeutet ist. Die Komponentenfilter 16 und 17 überprüfen nun Informationen 20, die von der Komponente 2 zu der weiteren Komponente 3 übertragen werden sollen, ob dieser Austausch gemäß der Logik, die in den Komponentenfiltern 16 und 17 ausgebildet ist, gestattet ist. Ist das Austauschen der Informationen sowohl im Hinblick auf Sender und Empfänger als auch deren Inhalt gestattet, so kann der Austausch der Informationen 20 stattfinden. Ist das Austauschen nicht gestattet, so unterbinden die Komponentenfilter 16 und 17 das Austauschen der Informationen 20.

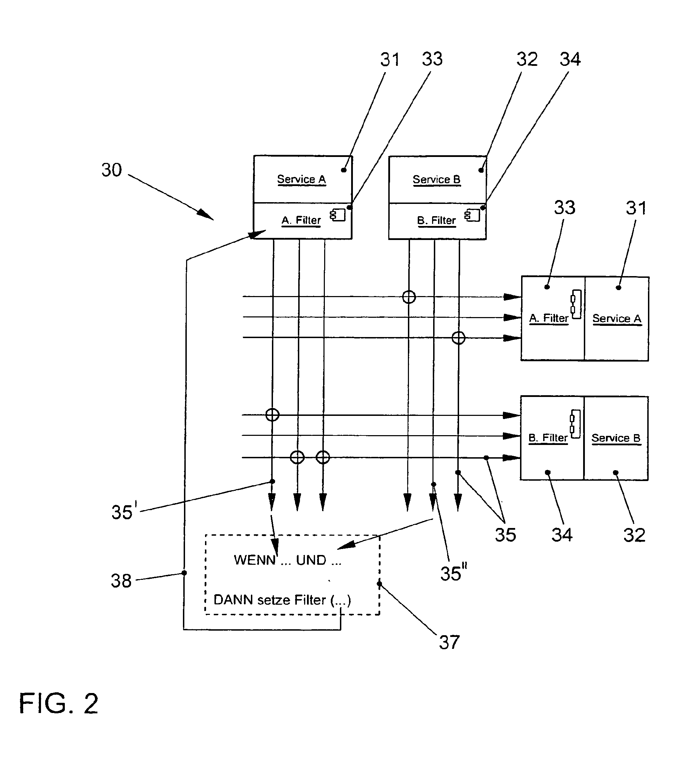

In Fig. 2 ist ein Kommunikationssystem 30 in einer Matrixdarstellung schematisch dargestellt. Das Kommunikationssystem 30 umfasst Komponenten 31 und 32, die jeweils Komponentenfilter 33 und 34 umfassen. Ein Austauschen von Informationen erfolgt mittels Nachrichten, die in Form von Pfeilen 35 angedeutet sind. Die unterschiedlichen Nachrichten 35, die von den Komponenten 31, 32 ausgehen, unterscheiden sich entweder hinsichtlich ihres Empfängers oder ihres Inhalts. Eine Logik des Kommunikationssystems 30 legt fest, welche Nachrichten, d.h. welche Informationen, ausgetauscht werden dürfen. Kreuzungspunkte der Pfeile, die eingekreist sind, deuten an, dass die Übertragung der Nachricht zulässig ist. Kreuzungspunkte, die nicht eingekreist sind, kennzeichnen einen von der Logik nicht zugelassenen Austausch von Informationen. Bei einer Änderung eines Zustands des Kommunikationssystems, der beispielsweise durch das Aussenden bestimmter Nachrichten 35' und 35" veranlasst wird, wird anhand von Regeln eines Regelwerks überprüft, ob die Logik und gegebenenfalls wie die Logik verändert werden soll. Das Auswerten (Inferenzieren) von Regeln und das anschließende Setzen eines Filtereintrags ist mittels eines Blocks 37 und eines Pfeils 38 angedeutet.

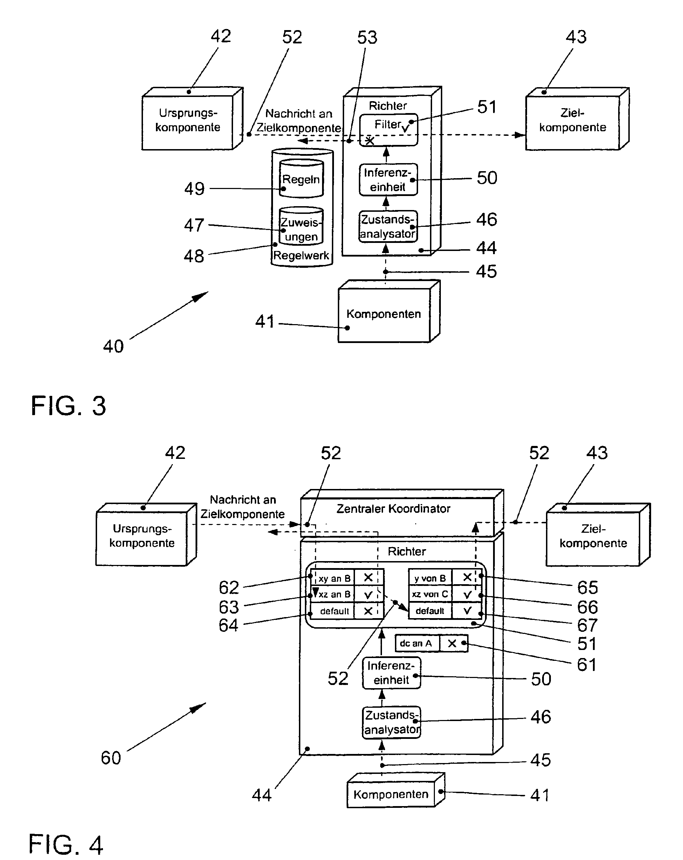

In Fig. 3 ist ein Kommunikationssystem 40 schematisch dargestellt, welches Komponenten 41, eine Ursprungskomponente 42 und eine Zielkomponente 43 umfasst. Das Kommunikationssystem 40 umfasst ferner eine zentrale Komponente 44. Die zentrale Komponente 44 empfängt Nachrichten 45 der Komponenten 41. Ein Zustandsanalysator 46 analysiert die Nachrichten 45 und bildet sie gegebenenfalls anhand von Zuweisungen 47, die in einem Regelwerk 48 umfasst sind, auf Zustandsvariablen ab. Die Gesamtheit aller Zustandsvariablen definiert den Zustand des Kommunikationssystems 40. Jede Änderung einer Zustandsvariable löst eine Auswertung (Inferenzierung) von Regeln 49 des Regelwerks 48 in einer Inferenzeinheit 50 aus. Es werden die Regeln 49 des Regelwerks 48 inferenziert, in deren Prämisse eine Zustandsvariable ausgelesen wird, die mit der Änderung des Zustands des Kommunikationssystems 40 verknüpft ist. Ist die Logikbedingung, die von der Prämisse umfasst ist, wahr, so wird als Ergebnis (Konklusion) eine Maßnahme ausgeführt, die in der Regel das Verändern eines Filtereintrags in einem Filter 51 umfasst. Eine Nachricht 52 von der Ursprungskomponente 42 zu der Zielkomponente 43 wird gegen den Filter 51, der die gegenwärtig gültige Logik wiedergibt, geprüft. Diese Prüfung erfolgt sowohl hinsichtlich des Ursprungs, des Ziels der Informationen, die ausgetauscht werden sollen, als auch des Inhalts der Informationen. Gestattet der Filter 51 den Austausch der Informationen 52, so werden diese zwischen der Ursprungskomponente 42 und der Zielkomponente 43 ausgetauscht. Gestattet der Filter 51 den Austausch der Informationen 52 nicht, so wird der Austausch unterbunden. Gegebenenfalls wird die Ursprungskomponente 42 hierüber mittels einer Nachricht 53 informiert.

In Fig. 4 ist eine andere Ausführungsform eines Kommunikationssystems 60 schematisch dargestellt, die dem Kommunikationssystem 40 nach Fig. 3 ähnelt. Gleiche technische Merkmale sind mit denselben Bezugszeichen versehen. Die zentrale Komponente 44 ist als zentraler Koordinator ausgebildet. Nicht dargestellt ist das Regelwerk mit den Regeln und den Zuweisungen. Die Nachrichten 45 der Komponenten 41 haben zu einer Änderung des Zustands des Kommunikationssystems geführt, in deren Folge ein zusätzlicher Filtereintrag 61 in den Filter 51 eingefügt wird. Der Filter 51 umfasst Filtereinträge 62 bis 67. Die Filtereinträge 62 bis 67 sind nach aktiven Filtereinträgen 62 bis 64, die das Versenden von Informationen für die einzelnen Komponenten 41 bis 43 gestatten oder verhindern und passiven Filtereinträgen 65 bis 67 gruppiert, die den Empfang von Informationen von bestimmten anderen Komponenten 41 bis 43 gestatten oder unterbinden. Anhand der Filtereinträge wird geprüft, ob ein bestimmter Inhalt übermittelt werden darf. Ist der Ursprungskomponente 42 beispielsweise der logische Name "B" zugeordnet und der Zielkomponente 43 der Name "C", so darf eine Nachricht bzw. dürfen Informationen xy von der Ursprungskomponente 42 zu der Zielkomponente 43 übertragen werden. Dies wird aufgrund der Filtereinträge 63 und 67 gestattet. Deutlich zu erkennen ist, dass die Filtereinträge 62-67 des Filters 51 vorzugsweise hierarchisch angeordnet sind, um eine einfache Struktur der Logik zu erreichen. Hierdurch kann die Anzahl der benötigten Auswertungen bzw. Filtereinträge deutlich reduziert werden.

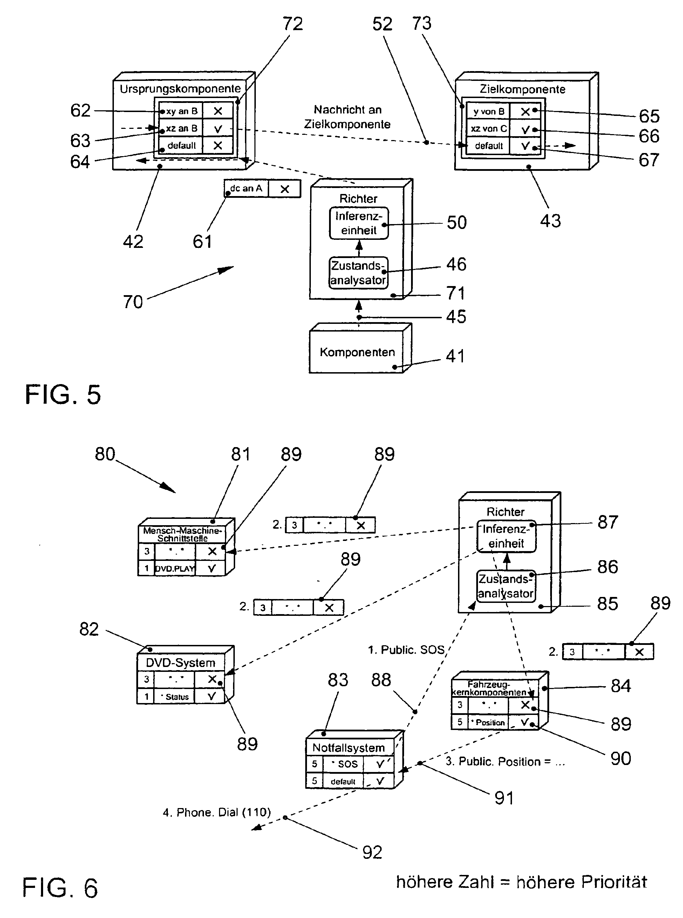

In Fig. 5 ist ein ähnliches Kommunikationssystem 70 dargestellt, bei dem gleiche technische Merkmale erneut mit denselben Bezugszeichen versehen sind. Eine zentrale Komponente 71, die den Zustandsanalysator 46 und die Inferenzeinheit 50 umfasst, ist nicht als zentraler Koordinator ausgebildet. Ferner ist der Filter, der die Logik ausbildet, in Form von Komponentenfiltern 72, 73, die dezentral in den Komponenten 42 und 43 angeordnet sind, ausgeführt. Der Filtereintrag 61, der aufgrund einer Änderung des Zustands des Kommunikationssystems 70 dem Filter hinzugefügt wird, wird von der zentralen Komponente 71 als Nachricht an die Ursprungskomponente 42 übertragen, wo der neue Filtereintrag 61 dem Komponentenfilter 72 zugefügt wird. Das Austauschen der Informationen bzw. der Nachricht 52 zwischen den Komponenten 42, 43erfolgt direkt zwischen den Komponenten 42, 43.

In Fig. 6 ist eine Ausführungsform eines Kommunikationssystems 80 dargestellt, bei dem eine einfache Änderung der Logik anhand von Filtereinträgen mit Prioritäten realisiert ist. Das Kommunikationssystem 80 umfasst als Komponenten eine Mensch-Maschine-Schnittstelle 81, ein DVD-System 82, ein Notfallsystem 83, Fahrzeugkernkomponenten 84 und eine zentrale Komponente 85. Die zentrale Komponente 85 umfasst einen Systemanalysator 86 und eine Inferenzeinheit 87 sowie ein Regelwerk mit Regeln und Zuweisungen (alle nicht dargestellt). Das Notfallsystem 83 erkennt eine Notfallsituation und setzt eine Notfallnachricht 88 ab. Der Zustandsanalysator 86 bildet die Notfallnachricht 88 auf eine Zustandsvariable ab. Anschließend wertet die Inferenzeinheit 87 die Regeln des Regelwerks aus. Als Maßnahme wird an alle Komponenten mit Ausnahme des Notfallsystems 83 ein Filtereintrag 89 übertragen, der eine Priorität 3 aufweist und sämtlichen Austausch von Informationen bzw. Nachrichten untersagt. Hierdurch wird die Kommunikation im Kommunikationssystem 80 stark minimiert, so dass sicherheitsrelevante Informationen, beispielsweise die Position des Fahrzeugs, von den Fahrzeugkernkomponenten 84 ungestört übertragen werden können. Diese Übertragung ist gestattet, da ein Filtereintrag 90 der Fahrzeugkernkomponenten 84 für Positionsmitteilungen eine höhere Priorität 5 aufweist als der Filtereintrag 89. Die Position des Fahrzeugs wird somit von den Fahrzeugkernkomponenten 84 mittels einer Nachricht 91 an das Notfallsystem 83 übertragen. Anschließend kann das Notfallsystem 83 einen Notruf 92 über ein Mobiltelefon (nicht dargestellt) absetzen, da das Notfallsystem 83 für alle von ihm versandten Nachrichten mit einer Priorität 5 versenden kann.

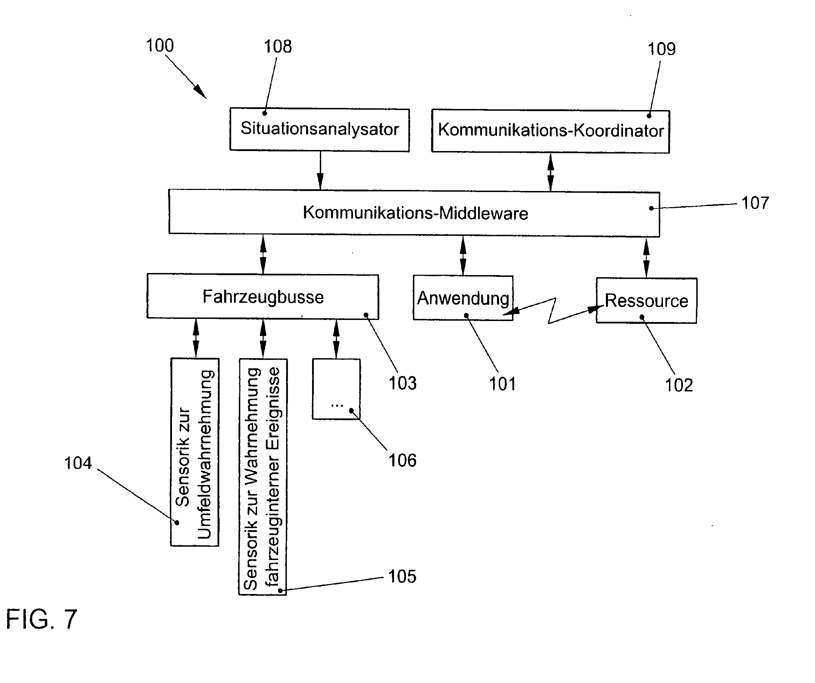

In Fig. 7 ist ein weiteres Kommunikationssystem 100 schematisch dargestellt. Das Kommunikationssystem 100 weist Anwendungen 101 und Ressourcen 102 sowie Fahrzeugbusse 103 sowie darüber angeschlossene Sensorik zur Umfeldwahrnehmung 104 und Sensorik zur Wahrnehmung von fahrzeuginternen Ereignissen 105 sowie weitere Komponenten 106 auf. Die Komponenten 101 bis 106 können über eine Kommunikationmiddleware 107 miteinander über Nachrichten kommunizieren. Ein Situationsanalysator wertet die Messergebnisse der Sensorik zur Umfeldwahrnehmung 104 und der Sensorik zur Wahrnehmung fahrzeuginterner Ereignisse 105 aus, um einen Fahrzeugzustand und/oder einen Fahrerzustand und/oder eine Fahrsituation zu ermitteln. Die Sensorik zur Umfeldwahrnehmung kann beliebige Sensoren zum Wahrnehmen der Umgebung des Fahrzeugs, beispielsweise Ultraschall-, Radarsensoren usw. umfassen. Die Sensorik zur Wahrnehmung fahrzeuginterner Ereignisse kann auf Messergebnisse von Fahrzeugkomponenten, beispielsweise eine ermittelte Geschwindigkeit, eine ermittelte Fahrzeuginnentemperatur oder Ergebnisse einer Auswertung einer Kamera zum Überwachen einer Lidschlagfrequenz des Fahrers, zurückgreifen, um hieraus beispielsweise dessen Müdigkeit abzuschätzen. Der Situationsanalysator 108 wertet zusätzlich die in den Nachrichten übertragenen Informationen hinsichtlich ihres Inhalts aus. Hierzu wird ermittelt, welche Aktion mittels der übertragenen Informationen ausgelöst werden soll. Dies ist besonders einfach möglich, wenn sich sowohl die Anwendungen 101 als auch die Ressourcen 102 bei dem Situationsanalysator anmelden. Der Situationsanalysator 108 umfasst eine Situationsmatrix, die vorzugsweise vierdimensional ist. Die einzelnen Einträge sind von dem Fahrzeugzustand der Fahrsituation, dem Fahrerzustand und der Aktion, die ausgelöst werden soll, abhängig und geben jeweils eine Priorität an. Diese Priorität wird den Informationen zugewiesen. So ist es beispielsweise wie oben bereits ausgeführt möglich, Sprachausgaben in bestimmten kritischen Fahrer- bzw. Fahrsituationen zu unterdrücken. Die den Informationen zugeordneten Prioritätsinformationen können ebenfalls verwendet werden, um den Zustand des Kommunikationssystems zu verändern und anstelle der Prioritätsinformationen, die den Informationen direkt zugeordnet sind, die Filtereinträge, die die Logik abbilden, mit Prioritäten zu versehen, wie dies im Zusammenhang mit der Beschreibung der Fig. 6 erläutert ist. Die Kommunikation des Kommunikationssystems 100 wird durch einen Kommunikationskoordinator 109 überwacht, der beispielsweise ähnlich wie der in Zusammenhang mit Fig. 4 beschriebene Kommunikationskoordinator ausgebildet ist. Die in der Prioritätsmatrix vorgegebenen Prioritätswerte können zeitlich beschränkt oder unbeschränkt als Folge einer erfassten Eingabe des Fahrers verändert werden. Beispielsweise kann ein Erfassen eines Knopfdrucks ein zeitliches Verändern der Priorität bewirken und ein Erfassen eines doppelten Knopfdrucks ein dauerhaftes Ändern des Prioritätswertes in der Prioritätsmatrix bewirken.

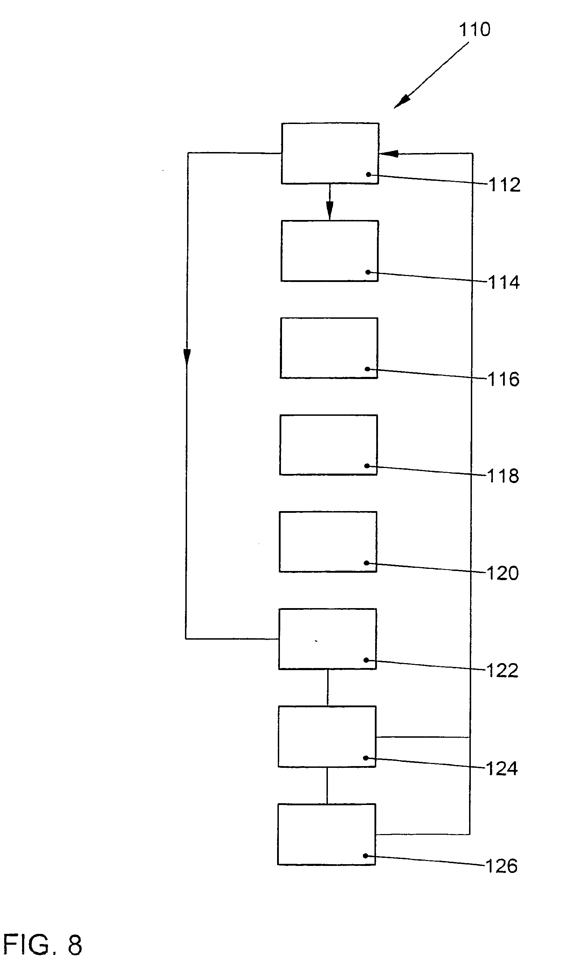

Anhand von Fig. 8 wird im Folgenden ein Ausführungsbeispiel eines Kommunikationsverfahrens 110 beschrieben. Eine Komponente sendet zunächst eine Nachricht 112. Ein Zustandsanalysator analysiert diese Nachricht 114. Hierbei bildet er die Nachricht gegebenenfalls auf eine Zustandsvariable ab 116. Jede Zuweisung löst eine Inferenz derjenigen Regeln aus, in deren Prämisse die Zustandsvariable ausgelesen wird, deren Zuweisung verändert wurde 118. Ist die Logikbedingung einer Prämisse einer Regel wahr, so wird als Maßnahme ein neuer Filtereintrag dem Filter zugefügt bzw. ein Filtereintrag gelöscht oder modifiziert 120. Zusätzlich wird die Nachricht gegen den Filter, der die Logik abbildet, geprüft 122. Ist der Austausch der Informationen gestattet, so werden die Informationen ausgetauscht 124. Ist der Austausch nicht gestattet, wird das Austauschen unterbunden 126. Mit weiteren auszutauschenden Informationen wird analog verfahren.

## Patentansprüche

1. Kontextabhängiges Kommunikationssystem (1; 30; 40; 60; 70; 80; 100) mit mehreren Komponenten (2, 3; 31, 32; 41-44; 81-85; 101-106), die ausgebildet sind, untereinander Informationen (20; 35; 52; 88, 91, 92) auszutauschen, wobei das Austauschen der Informationen (20; 35; 52; 88, 91, 92) zwischen den Komponenten (2, 3; 31, 32; 41-44; 81-85; 101-106) über eine Logik (14) beschränkt ist, wobei
die Logik (14) in Abhängigkeit eines Zustands des Kommunikationssystems (1; 30;40; 60; 70; 80; 100) veränderbar ist,
die Logik (14) in Form eines Filters (15; 51) mit einem oder mehreren Filtereinträgen (61-67; 89, 90) ausgebildet ist, wobei die Filtereinträge (61-67; 89, 90) die Beschränkung des Austauschens der Informationen (20; 35; 52; 88, 91, 92) festlegen,
**dadurch gekennzeichnet, dass**
der Filter (15) der Logik (14) dezentrale, in den einzelnen Komponenten (2, 3; 31, 32; 41-44; 81-85; 101-106) angeordnete Komponentenfilter (16, 17; 72, 73) umfasst.

2. Kommunikationssystem (1; 30; 40; 60; 70; 80; 100) nach Anspruch 1, **dadurch gekennzeichnet, dass** mindestens ein Filter (15, 51) einen Filtereintrag (61-67, 89, 90) umfasst, der ausgebildet ist, das Austauschen der Information in Abhängigkeit eines Inhalts der Information, gegebenenfalls zusätzlich abhängig von der Ursprungsangabe und/oder der Zielangabe der Information, zu gestatten oder zu unterbinden.

3. Kommunikationssystem (1; 30; 40; 60; 70; 80; 100) nach Anspruch 1 oder 2, **dadurch gekennzeichnet, dass** die Informationen in Form von Nachrichten ausgetauscht werden und die Nachrichten jeweils eine Ursprungsangabe, eine Zielangabe und einen Inhalt der Informationen umfassen und das Beschränken des Austauschens ein Überprüfen der Nachrichten auf ein Gestatten oder Unterbinden des Austauschens der Nachrichten umfasst.

4. Kommunikationssystem (1; 30; 40; 60; 70; 80; 100) nach einem der vorangehenden Ansprüche, **dadurch gekennzeichnet, dass** die Logik (14) ein Regelwerk (48) umfasst, anhand dessen die Filtereinträge (61-67; 89, 90) des Filters (15; 51) in Abhängigkeit von dem Zustand des Kommunikationssystems (1; 30; 40; 60; 70; 80; 100) veränderbar sind.

5. Kommunikationssystem (1; 30; 40; 60; 70; 80; 100) nach einem der vorangehenden Ansprüche, **dadurch gekennzeichnet, dass** der Zustand des Kommunikationssystems (1; 30; 40; 60; 70; 80; 100) mittels der ausgetauschten Informationen (20; 35; 52; 88, 91, 92) beeinflussbar ist.

6. Kommunikationssystem (1; 30; 40; 60; 70; 80; 100) nach einem der vorangehenden Ansprüche, **dadurch gekennzeichnet, dass** mittels eines Zustandsanalysators (46; 86) der Zustand des Kommunikationssystems (1; 30; 40; 60; 70; 80; 100) abbildbar ist, wobei die ausgetauschten Informationen (20; 35; 52; 88, 91, 92) mittels des Zustandsanalysators (46; 86) analysierbar sind und anhand des Inhalts der ausgetauschten Informationen (20; 35; 52; 88, 91, 92) Zustandsvariablen veränderbar sind, wobei die Gesamtheit der Zustandsvariablen den Zustand des Kommunikationssystems (1; 30; 40; 60; 70; 80; 100) charakterisiert.

7. Kommunikationssystem (1; 30; 40; 60; 70; 80; 100) nach einem der vorangehenden Ansprüche, **dadurch gekennzeichnet, dass** der Filter (15; 51) mindestens einen aktiven Filtereintrag (61-67; 89, 90) umfasst, mit Hilfe dessen die ausgetauschten Informationen (20; 35; 52; 88, 91, 92) veränderbar sind.

8. Kommunikationssystem (1; 30; 40; 60; 70; 80; 100) nach einem der vorangehenden Ansprüche, **gekennzeichnet durch** einen Situationsanalysierer, der mit einer Sensorik (104, 105) zum Erfassen eines Fahrzeugzustands eines Fahrzeugs und/oder eines Fahrerzustands und/oder einer Fahrsituation des Fahrzeugs verknüpft ist und eine Prioritätseinheit umfasst, wobei mittels der Prioritätseinheit den Informationen (20; 35; 52; 88, 91, 92) und/oder den Filtereinträgen (61-67; 89, 90) Prioritätsinformationen in Abhängigkeit von dem Fahrzeugzustand und/oder dem Fahrerzustand und/oder der Fahrsituation und/oder einer Aktion, die mittels der Informationen (20; 35; 52; 88, 91, 92) ausgelöst werden soll, zuordenbar ist.

9. Kommunikationssystem (1; 30; 40; 60; 70; 80; 100) nach einem der vorangehenden Ansprüche, **dadurch gekennzeichnet, dass** der Filter (15; 51) zusätzlich einen Zentralfilter umfasst.

10. Kommunikationssystem (1; 30; 40; 60; 70; 80; 100) nach einem der vorangehenden Ansprüche, **dadurch gekennzeichnet, dass** das Regelwerk (48) Regeln umfasst, die eine Prämisse und eine Maßnahme umfassen, wobei die Prämisse jeweils eine logische Bedingung umfasst, und mittels einer Inferenzeinheit (50, 87) nur die Regeln des Regelwerks (48) auswertbar sind, in deren Prämisse eine der Zustandsvariablen ausgewertet wird, die mit der Änderung des Zustands des Kommunikationssystems (1; 30; 40; 60; 70; 80; 100) verknüpft sind.

11. Kommunikationssystem (1; 30; 40; 60; 70; 80; 100) nach einem der vorangehenden Ansprüche, **dadurch gekennzeichnet, dass** als Maßnahme einer Regel, wenn die Prämisse erfüllt ist, ein Verändern der Filtereinträge (61-67; 89, 90) ausführbar ist.

12. Kommunikationssystem (1; 30; 40; 60; 70; 80; 100) nach einem der vorangehenden Ansprüche, **dadurch gekennzeichnet, dass** das Verändern der Filtereinträge (61-67; 89, 90) ein Austauschen von Informationen (20; 35; 52; 88, 91, 92) umfasst.

13. Kontextabhängiges Kommunikationsverfahren (110) zum Austauschen von Informationen (20; 35; 52; 88, 91, 92) zwischen miteinander verknüpften Komponenten (2, 3; 31, 32; 41-44; 81-85; 101-106), wobei das Austauschen der Informationen (20; 35; 52; 88, 91, 92) mittels einer Logik (14) beschränkt ist, umfassend die Schritte:
Überprüfen der auszutauschenden Informationen (20; 35; 52; 88, 91, 92) gegen die Logik (14), um das Austauschen der Informationen (20; 35; 52; 88, 91, 92) gemäß der Logik (14) zu beschränken, wobei die Logik (14) in Abhängigkeit eines Zustands des Kommunikationssystems (1; 30; 40; 60; 70; 80; 100) verändert wird,
und die Informationen ausgetauscht werden, sofern das Austauschen gestattet ist, und sonst der Austausch unterbunden wird,
wobei die Logik (14) in Form eines Filters (15; 51) mit einem oder mehreren Filtereinträgen (61-67; 89, 90) ausgebildet ist, wobei die Filtereinträge (61-67; 89, 90) die Beschränkung des Austauschens der Informationen (20; 35; 52; 88, 91, 92) festlegen,
**dadurch gekennzeichnet, dass**
das Überprüfen der auszutauschenden Informationen (20; 35; 52; 88, 91, 92) gegen die Logik (14) in dezentralen, in den einzelnen Komponenten (2, 3; 31, 32; 41-44; 81-85; 101-106) angeordnete Komponentenfilter (16, 17; 72, 73) ausgeführt wird, die von dem Filter (15; 51) der Logik (14) umfasst sind.

14. Kommunikationsverfahren (1; 30; 40; 60; 70; 80; 100) nach Anspruch 13, **dadurch gekennzeichnet, dass** mindestens ein Filter (15, 51) einen Filtereintrag (61-67, 89, 90) umfasst, der das Austauschen der Information in Abhängigkeit des Inhalts der Information, gegebenenfalls zusätzlich abhängig von der Ursprungsangabe und/oder der Zielangabe der Information, gestattet oder unterbindet.

15. Kommunikationsverfahren (110) nach Anspruch 13 oder 14, **dadurch gekennzeichnet, dass** die Informationen in Form von Nachrichten ausgetauscht werden und die Nachrichten jeweils eine Ursprungsangabe, eine Zielangabe und einen Inhalt der Informationen umfassen und dass beim Überprüfen der auszutauschenden Informationen (20; 35; 52; 88, 91, 92) gegen die Logik (14) ermittelt wird, ob ein Austauschen der Informationen die gemäß der Logik zu gestatten oder zu unterbinden ist, und die Informationen ausgetauscht werden, sofern das Austauschen gestattet ist, und sonst der Austausch unterbunden wird,

16. Kommunikationsverfahren (110) nach einem der Ansprüche 13 bis 15, **dadurch gekennzeichnet, dass** die Logik (14) ein Regelwerk (48) umfasst, anhand dessen die Filtereinträge (61-67; 89, 90) des Filters (15; 51) in Abhängigkeit von dem Zustand des Kommunikationssystems (1; 30; 40; 60; 70; 80; 100) verändert werden.

17. Kommunikationsverfahren (110) nach einem der Ansprüche 13 bis 16, **dadurch gekennzeichnet, dass** die ausgetauschten Informationen (20; 35; 52; 88, 91, 92) den Zustand des Kommunikationssystems (1; 30; 40; 60; 70; 80; 100) beeinflussen.

18. Kommunikationsverfahren (110) nach einem der Ansprüche 13 bis 17, **dadurch gekennzeichnet, dass** die Informationen (20; 35; 52; 88, 91, 92) in Form von Nachrichten zwischen den Komponenten (2, 3; 31, 32; 41-44; 81-85; 101-106) ausgetauscht werden.

19. Kommunikationsverfahren (110) nach einem der Ansprüche 13 bis 18, **dadurch gekennzeichnet, dass** der Filter (15; 51) mindestens einen aktiven Filtereintrag umfasst, mit Hilfe dessen die ausgetauschten Informationen (20; 35; 52; 88, 91, 92) verändert werden.

20. Kommunikationsverfahren (110) nach einem der Ansprüche 13 bis 19, **dadurch gekennzeichnet, dass** mittels einer Sensorik (104, 105) ein Fahrzeugzustand eines Fahrzeugs und/oder eines Fahrerzustands eines Fahrers des Fahrzeugs und/oder einer Fahrsituation des Fahrzeugs erfasst wird und den ausgetauschten Informationen (20; 35; 52; 88, 91, 92) und/oder den Filtereinträgen jeweils mittels einer Prioritätseinheit eines Situationsanalysators Prioritätsinformationen in Abhängigkeit von dem Fahrzeugzustand und/oder dem Fahrerzustand und/oder der Fahrsituation und/oder einer Aktion, die mittels der ausgetauschten Informationen (20; 35; 52; 88, 91, 92) ausgelöst werden soll, zugeordnet werden.

21. Kommunikationsverfahren (110) nach Anspruch 20, **dadurch gekennzeichnet, dass** die Prioritätsinformationen anhand einer vierdimensionalen Prioritätsmatrix ermittelt werden, deren Einträge von dem Fahrzeugzustand, dem Fahrerzustand, der Fahrsituation und der auszuführenden Aktion abhängig sind.

22. Kommunikationsverfahren (110) nach Anspruch 20 oder 21, **dadurch gekennzeichnet, dass** in der Prioritätsmatrix vorgegebene Prioritätswerte zeitlich beschränkt oder unbeschränkt als Folge einer erfassten Eingabe des Fahrers verändert werden.

23. Kommunikationsverfahren (110) nach einem der Ansprüche 13 bis 22, **dadurch gekennzeichnet, dass** das Überprüfen der auszutauschenden Informationen (20; 35; 52; 88, 91, 92) gegen die Logik (14) zumindest teilweise zusätzlich in einem Zentralfilter ausgeführt wird.

24. Kommunikationsverfahren (110) nach einem der Ansprüche 13 bis 23, **dadurch gekennzeichnet, dass** ein Zustandsanalysator den Zustand des Kommunikationssystems (1; 30; 40; 60; 70; 80; 100) abbildet, wobei die ausgetauschten Informationen (20; 35; 52; 88, 91, 92) mittels des Zustandsanalysators (46; 86) analysiert werden und anhand des Inhalts der ausgetauschten Informationen (20; 35; 52; 88, 91, 92) Zustandsvariablen gesetzt und oder verändert werden, wobei die Gesamtheit der Zustandsvariablen den Zustand des Kommunikationssystems (1; 30;40; 60; 70; 80; 100) charakterisiert.

25. Kommunikationsverfahren (110) nach einem der Ansprüche 13 bis 24, **dadurch gekennzeichnet, dass** bei einer Änderung des Systemzustands mittels einer Inferenzeinheit (50, 87) anhand des Regelwerks (48) die Filtereinträge (61-67; 89, 90) verändert werden.

26. Kommunikationsverfahren (110) nach einem der Ansprüche 13 bis 25, **dadurch gekennzeichnet, dass** das Regelwerk (48) Regeln umfasst, die eine Prämisse und eine Maßnahme umfassen, wobei die Prämisse jeweils eine logische Bedingung umfasst, und mittels der Inferenzeinheit (50, 87) nur die Regeln des Regelwerks (48) ausgewertet werden, in deren Prämisse eine der Zustandsvariablen ausgewertet wird, die mit der Änderung des Zustands des Kommunikationssystems (1; 30; 40; 60; 70; 80; 100) verknüpft sind, und die Maßnahme, die eine Veränderung der Filtereinträge (61-67; 89, 90) bewirkt, ausgeführt wird, wenn die Prämisse erfüllt ist.

27. Kommunikationsverfahren (110) nach einem der Ansprüche 13 bis 26, **dadurch gekennzeichnet, dass** zum Verändern der Filtereinträge (61-67; 89, 90) Informationen (20; 35; 52; 88, 91, 92) zu den dezentral in den Komponenten (2, 3; 31, 32; 41-44; 81-85; 101-106) angeordneten Komponentenfiltem (16, 17; 72, 73) übermittelt werden.

28. Komponente (2, 3; 31, 32; 41-44; 81-85; 101-106) für ein kontextabhängiges Kommunikationssystem gemäß Anspruch 1 (1; 30; 40; 60; 70; 80; 100) zum Austauschen von Informationen (20; 35; 52; 88, 91, 92) mit anderen Komponenten (2, 3; 31, 32; 41-44; 81-85; 101-106) des Kommunikationssystems (1; 30; 40; 60; 70; 80; 100) umfassend eine Sende/Empfangseinheit zum Senden und/oder Empfangen von Informationen (20; 35; 52; 88, 91, 92), eine lokale Logikeinheit zum Prüfen der auszusendenden und/oder zu empfangenden Informationen (20; 35; 52; 88, 91, 92) gegen eine Logik (14), wobei die Logikeinheit ausegbildet ist, das Austauschen von Informationen (20; 35; 52; 88, 91, 92) mit den anderen Komponenten (2, 3; 31, 32; 41-44; 81-85; 101-106) gemäß der Überprüfung gegen die Logik (14) zu beschränken,
die Logik (14) in Abhängigkeit eines Zustands des Kommunikationssystems (1; 30;40; 60; 70; 80; 100) veränderbar ist, wobei die Logik (14) in der Logikeinheit in Form eines Filters (15; 51) mit einem oder mehreren Filtereinträgen (61-67; 89, 90) ausgebildet ist und die Filtereinträge (61-67; 89, 90) die Beschränkung des Austauschens der Informationen (20; 35; 52; 88, 91, 92) festlegen.

29. Komponente (2, 3; 31, 32; 41-44; 81-85; 101-106) nach Anspruch 28, **dadurch gekennzeichnet, dass** mindestens einer der Filtereinträge (61-67, 89, 90) ausgebildet ist, das Austauschen der Information in Abhängigkeit eines Inhalts der Information, gegebenenfalls zusätzlich abhängig von der Ursprungsangabe und/oder der Zielangabe der Information, zu gestatten oder zu unterbinden.

30. Komponente (2, 3; 31, 32; 41-44; 81-85; 101-106) nach Anspruch 28 oder 29, **dadurch gekennzeichnet, dass** die Informationen in Form von Nachrichten ausgetauscht werden und die Nachrichten jeweils eine Ursprungsangabe, eine Zielangabe und einen Inhalt der Informationen umfassen und das Beschränken des Austauschens ein Überprüfen der Nachrichten auf ein Gestatten oder Unterbinden des Austauschens der Nachrichten umfasst.

31. Komponente (2, 3; 31, 32; 41-44; 81-85; 101-106) nach einem der Ansprüche 28 bis 30, **dadurch gekennzeichnet, dass** Logik (14) mittels des Veränderns der Filtereinträge (61-67; 89, 90) veränderbar ist.

32. Komponente (2, 3; 31, 32; 41-44; 81-85; 101-106) nach einem der Ansprüche 28 bis 31, **dadurch gekennzeichnet, dass** die benötigten Informationen (20; 35; 52; 88, 91, 92) für das Verändern der Filtereinträge (61-67; 89, 90) in Form von ausgetauschten Informationen (20; 35; 52; 88, 91, 92) empfangbar sind.

## Claims

1. Context-dependent communication system (1; 30; 40; 60; 70; 80; 100) having a plurality of components (2, 3; 31, 32; 41-44; 81-85; 101-106) which are designed to interchange information (20; 35; 52; 88, 91, 92) with one another, the interchange of the information (20; 35; 52; 88, 91, 92) between the components (2, 3; 31, 32; 41-44; 81-85; 101-106) being limited by means of a piece of logic (14), wherein
the logic (14) can be altered on the basis of a state of the communication system (1; 30; 40; 60; 70; 80; 100),
the logic (14) is in the form of a filter (15; 51) with one or more filter entries (61-67; 89, 90), the filter entries (61-67; 89, 90) stipulating the limitation for the interchange of the information (20; 35; 52; 88, 91, 92),
**characterized in that**
the filter (15) of the logic (14) comprises distributed component filters (16, 17; 72, 73) arranged in the individual components (2, 3; 31, 32; 41-44; 81-85; 101-106).

2. Communication system (1; 30; 40; 60; 70; 80; 100) according to Claim 1, **characterized in that** at least one filter (15, 51) comprises a filter entry (61-67, 89, 90) which is designed to allow or prevent the interchange of the information on the basis of the content of the information, possibly additionally on the basis of the source statement and/or the destination statement for the information.

3. Communication system (1; 30; 40; 60; 70; 80; 100) according to Claim 1 or 2, **characterized in that** the information is interchanged in the form of messages and the messages respectively comprise a source statement, a destination statement and a content for the information, and the limitation for the interchange comprises checking of the messages for allowance or prevention of the interchange of the messages.

4. Communication system (1; 30; 40; 60; 70; 80; 100) according to one of the preceding claims, **characterized in that** the logic (14) comprises a rulebook (48) which can be used to alter the filter entries (61-67; 89, 90) of the filter (15; 51) on the basis of the state of the communication system (1; 30; 40; 60; 70; 80; 100).

5. Communication system (1; 30; 40; 60; 70; 80; 100) according to one of the preceding claims, **characterized in that** the state of the communication system (1; 30; 40; 60; 70; 80; 100) can be influenced by means of the interchanged information (20; 35; 52; 88, 91, 92).

6. Communication system (1; 30; 40; 60; 70; 80; 100) according to one of the preceding claims, **characterized in that** a state analyser (46; 86) can be used to map the state of the communication system (1; 30; 40; 60; 70; 80; 100), wherein the interchanged information (20; 35; 52; 88, 91, 92) can be analysed by means of the state analyser (46; 86) and the content of the interchanged information (20; 35; 52; 88, 91, 92) can be used to alter state variables, the sum total of the state variables characterizing the state of the communication system (1; 30; 40; 60; 70; 80; 100).

7. Communication system (1; 30; 40; 60; 70; 80; 100) according to one of the preceding claims,
**characterized in that** the filter (15; 51) comprises at least one active filter entry (61-67; 89, 90) which can be used to alter the interchanged information (20; 35; 52; 88, 91, 92).

8. Communication system (1; 30; 40; 60; 70; 80; 100) according to one of the preceding claims, **characterized by** a situation analyser which is linked to a sensor system (104, 105) for sensing a vehicle state for a vehicle and/or a driver state and/or a driving situation for the vehicle and comprises a priority unit, wherein the priority unit can be used to associate priority information with the information (20; 35; 52; 88, 91, 92) and/or with the filter entries (61-67; 89, 90) on the basis of the vehicle state and/or the driver state and/or the driving situation and/or an action which is intended to be initiated by means of the information (20; 35; 52; 88, 91, 92).

9. Communication system (1; 30; 40; 60; 70; 80; 100) according to one of the preceding claims,
**characterized in that** the filter (15; 51) additionally comprises a central filter.

10. Communication system (1; 30; 40; 60; 70; 80; 100) according to one of the preceding claims, **characterized in that** the rulebook (48) comprises rules which comprise a premise and a measure,
wherein the premise respectively comprises a logic condition, and an inference unit (50, 87) can be used to evaluate only those rules in the rulebook (48) in whose premise is evaluated one of the state variables which are linked to the change in the state of the communication system (1; 30; 40; 60; 70; 80; 100).

11. Communication system (1; 30; 40; 60; 70; 80; 100) according to one of the preceding claims, **characterized in that** the measure which can be implemented for a rule when the premise is satisfied is alteration of the filter entries (61-67; 89, 90).

12. Communication system (1; 30; 40; 60; 70; 80; 100) according to one of the preceding claims, **characterized in that** the alteration of the filter entries (61-67; 89, 90) comprises interchange of information (20; 35; 52; 88, 91, 92).

13. Context-dependent communication method (110) for the interchange of information (20; 35; 52; 88, 91, 92) between interlinked components (2, 3; 31, 32; 41-44; 81-85; 101-106), wherein the interchange of the information (20; 35; 52; 88, 91, 92) is limited by means of a piece of logic (14), comprising the following steps:
the information (20; 35; 52; 88, 91, 92) to be interchanged is checked against the logic (14) in order to limit the interchange of the information (20; 35; 52; 88, 91, 92) on the basis of the logic (14), the logic (14) being altered on the basis of the state of the communication system (1; 30; 40; 60; 70; 80; 100),
and the information is interchanged if the interchange is allowed
and otherwise the interchange is prevented,
wherein the logic (14) is in the form of a filter (15; 51) having one or more filter entries (61-67; 89, 90), the filter entries (61-67; 89, 90) stipulating the limitation for the interchange of the information (20; 35; 52; 89, 91, 92),
**characterized in that**
the information (20; 35; 52; 88, 91, 92) to be interchanged is checked against the logic (14) in distributed component filters (16, 17; 72, 73) which are arranged in the individual components (2, 3; 31, 32; 41-44; 81-85; 101-106) and which are included by the filter (15; 51) of the logic (14).

14. Communication method (1; 30; 40; 60; 70; 80; 100) according to Claim 13, **characterized in that** at least one filter (15, 51) comprises a filter entry (61-67, 89, 90) which allows or prevents the interchange of the information on the basis of the content of the information, possibly additionally on the basis of the source statement and/or the destination statement for the information.

15. Communication method (110) according to Claim 13 or 14, **characterized in that** the information is interchanged in the form of messages and the messages respectively comprise a source statement, a destination statement and a content for the information, and **in that** the checking of the information (20; 35; 52; 88, 91, 92) to be interchanged against the logic (14) involves ascertaining whether interchange of the information needs to be allowed or prevented on the basis of the logic, and the information is interchanged if the interchange is allowed and otherwise the interchange is prevented.

16. Communication method (110) according to one of Claims 13 to 15**, characterized in that** the logic (14) comprises a rulebook (48) which is used to alter the filter entries (61-67; 89, 90) of the filter (15; 51) on the basis of the state of the communication system (1; 30; 40; 60; 70; 80; 100).

17. Communication method (110) according to one of Claims 13 to 16, **characterized in that** the interchanged information (20; 35; 52; 88, 91, 92) influences the state of the communication system (1; 30; 40; 60; 70; 80; 100).

18. Communication method (110) according to one of Claims 13 to 17, **characterized in that** the information (20; 35; 52; 88, 91, 92) is interchanged between the components (2, 3; 31, 32; 41-44; 81-85; 101-106) in the form of messages.

19. Communication method (110) according to one of Claims 13 to 18, **characterized in that** the filter (15; 51) comprises at least one active filter entry which is used to alter the interchanged information (20; 35; 52; 88, 91, 92).

20. Communication method (110) according to one of Claims 13 to 19, **characterized in that** a sensor system (104, 105) is used to sense a vehicle state for a vehicle and/or a driver state for a driver of the vehicle and/or a driving situation for the vehicle, and priority information is associated with the interchanged information (20; 35; 52; 88, 91, 92) and/or with the filter entries in each case by means of a priority unit in a situation analyser on the basis of the vehicle state and/or the driver state and/or the driving situation and/or an action which is intended to be initiated by means of the interchanged information (20; 35; 52; 88, 91, 92).

21. Communication method (110) according to Claim 20, **characterized in that** the priority information is ascertained using a four-dimensional priority matrix whose entries are dependent on the vehicle state, the driver state, the driving situation and the action to be performed.

22. Communication method (110) according to Claim 20 or 21, **characterized in that** priority values prescribed in the priority matrix are altered with a time limit or without limitation as a consequence of a sensed input from the driver.

23. Communication method (110) according to one of Claims 13 to 22, **characterized in that** the information (20; 35; 52; 88, 91, 92) to be interchanged is checked against the logic (14) at least to some extent additionally in a central filter.

24. Communication method (110) according to one of Claims 13 to 23, **characterized in that** a state analyser maps the state of the communication system (1; 30; 40; 60; 70; 80; 100), wherein the interchanged information (20; 35; 52; 88, 91, 92) is analysed by means of the state analyser (46; 86), and the content of the interchanged information (20; 35; 52; 88, 91, 92) is used to set and/or alter state variables, the sum total of the state variables characterizing the state of the communication system (1; 30; 40; 60; 70; 80; 100).

25. Communication method (110) according to one of claims 13 to 24, **characterized in that** the filter entries (61-67; 89, 90) are altered when the system state is changed by means of an inference unit (50, 87) using the rulebook (48).

26. Communication method (110) according to one of Claims 13 to 25, **characterized in that** the rulebook (48) comprises rules which comprise a premise and a measure, wherein the premise comprises a respective logic condition, and the inference unit (50, 87) is used to evaluate only those rules in the rulebook (48) in whose premise is evaluated one of the state variables which are linked to the change in the state of the communication system (1; 30; 40; 60; 70; 80; 100), and the measure which brings about alteration of the filter entries (61-67; 89, 90) is performed when the premise is satisfied.

27. Communication method (110) according to one of Claims 13 to 26, **characterized in that** the filter entries (61-67; 89, 90) are altered by transmitting information (20; 35; 52; 88, 91, 92) to the component filters (16, 17; 72, 73) arranged in distributed fashion in the components (2, 3; 31, 32; 41-44; 81-85; 101-106).

28. Component (2, 3; 31, 32; 41-44; 81-85; 101-106) for a context-dependent communication system according to Claim 1 (1; 30; 40; 60; 70; 80; 100) for the interchange of information (20; 35; 52; 88, 91, 92) with other components (2, 3; 31, 32; 41-44; 81-85; 101-106) of the communication system (1; 30; 40; 60; 70; 80; 100) comprising
a transmission/reception unit for sending and/or receiving information (20; 35; 52; 88, 91, 92),
a local logic unit for checking the information (20; 35; 52; 88, 91, 92) which is to be sent and/or received against a piece of logic (14),
wherein the logic unit is designed to limit the interchange of information (20; 35; 52; 88, 91, 92) with the other components (2, 3; 31, 32; 41-44; 81-85; 101-106) on the basis of the check against the logic (14),
the logic (14) can be altered on the basis of a state of the communication system (1; 30; 40; 60; 70; 80; 100), wherein the logic (14) in the logic unit is in the form of a filter (15; 51) having one or more filter entries (61-67; 89, 90) and the filter entries (61-67; 89, 90) stipulate the limitation for the interchange of the information (20; 35; 52; 88, 91, 92).

29. Component (2, 3; 31, 32; 41-44; 81-85; 101-106) according to Claim 28, **characterized in that** at least one of the filter entries (61-67, 89, 90) is designed to allow or prevent the interchange of the information on the basis of a content of the information, possibly additionally on the basis of the source statement and/or the destination statement for the information.

30. Component (2, 3; 31, 32; 41-44; 81-85; 101-106) according to Claim 28 or 29, **characterized in that** the information is interchanged in the form of messages and the messages respectively comprise a source statement, a destination statement and the content of the information, and the limitation of the interchange comprises checking of the messages for allowance or prevention of the interchange of the messages.

31. Component (2, 3; 31, 32; 41-44; 81-85; 101-106) according to one of Claims 28 to 30, **characterized in that** the logic (14) can be altered by means of the alteration of the filter entries (61-67; 89, 90).

32. Component (2, 3; 31, 32; 41-44; 81-85; 101-106) according to one of Claims 28 to 31, **characterized in that** the required information (20; 35; 52; 88, 91, 92) for the alteration of the filter entries (61-67; 89, 90) can be received in the form of interchanged information (20; 35; 52; 88, 91, 92).

## Revendications

1. Système de communication contextuel (1 ; 30 ; 40 ; 60 ; 70 ; 80 ; 100) comprenant plusieurs composants (2, 3 ; 31, 32 ; 41-44 ; 81-85 ; 101-106) qui sont conçus pour échanger des informations (20 ; 35 ; 52 ; 88, 91, 92) entre eux, l'échange d'informations (20 ; 35 ; 52 ; 88, 91, 92) entre les composants (2, 3 ; 31, 32 ; 41-44 ; 81-85 ; 101-106) étant restreint par un circuit logique (14), le circuit logique (14) pouvant être modifié en fonction d'un état du système de communication (1 ; 30 ; 40 ; 60 ; 70 ; 80 ; 100), le circuit logique (14) étant réalisé sous la forme d'un filtre (15 ; 51) doté d'un ou plusieurs éléments de filtrage (61-67 ; 89, 90), les éléments de filtrage (61-67 ; 89, 90) déterminant la restriction d'échange des informations (20 ; 35 ; 52 ; 88, 91, 92), **caractérisé en ce que** le filtre (15) du circuit logique (14) comprend des filtres de composant (16, 17 ; 72, 73) disposés de manière décentralisée dans les composants individuels (2, 3 ; 31, 32 ; 41-44 ; 81-85 ; 101-106).

2. Système de communication (1 ; 30 ; 40 ; 60 ; 70 ; 80 ; 100) selon la revendication 1, **caractérisé en ce qu'**au moins un filtre (15, 51) comprend un élément de filtrage (61-67 ; 89, 90) qui est conçu pour autoriser ou pour interdire l'échange d'informations en fonction d'un contenu de l'information, le cas échéant en plus en fonction de l'indication d'origine et/ou de l'indication de la destination de l'information.

3. Système de communication (1 ; 30 ; 40 ; 60 ; 70 ; 80 ; 100) selon la revendication 1 ou 2, **caractérisé en ce que** les informations sont échangées sous la forme de messages et les messages comprennent à chaque fois une indication d'origine, une indication de destination et un contenu des informations et la restriction de l'échange comprend un contrôle des messages pour déterminer s'il existe une autorisation ou une interdiction d'échange des messages.

4. Système de communication (1 ; 30 ; 40 ; 60 ; 70 ; 80 ; 100) selon l'une des revendications précédentes, **caractérisé en ce que** le circuit logique (14) comprend un élément de réglage (48) au moyen duquel peuvent être modifiés les éléments de filtrage (61-67 ; 89, 90) du filtre (15 ; 51) en fonction de l'état du système de communication (1 ; 30 ; 40 ; 60 ; 70 ; 80 ; 100).

5. Système de communication (1 ; 30 ; 40 ; 60 ; 70 ; 80 ; 100) selon l'une des revendications précédentes, **caractérisé en ce que** l'état du système de communication (1 ; 30 ; 40 ; 60 ; 70 ; 80 ; 100) peut être influencé au moyen des informations (20 ; 35 ; 52 ; 88, 91, 92) échangées.

6. Système de communication (1 ; 30 ; 40 ; 60 ; 70 ; 80 ; 100) selon l'une des revendications précédentes, **caractérisé en ce que** l'état du système de communication (1 ; 30 ; 40 ; 60 ; 70 ; 80 ; 100) peut être représenté au moyen d'un analyseur d'état (46 ; 86), les informations (20 ; 35 ; 52 ; 88, 91, 92) échangées pouvant être analysées au moyen de l'analyseur d'état (46 ; 86) et des variables d'état pouvant être modifiées au moyen du contenu des informations (20 ; 35 ; 52 ; 88, 91, 92) échangées, l'ensemble des variables d'état caractérisant l'état du système de communication (1 ; 30 ; 40 ; 60 ; 70 ; 80 ; 100).

7. Système de communication (1 ; 30 ; 40 ; 60 ; 70 ; 80 ; 100) selon l'une des revendications précédentes, **caractérisé en ce que** le filtre (15 ; 51) comprend au mois un élément de filtrage actif (61-67 ; 89, 90) à l'aide duquel les informations (20 ; 35 ; 52 ; 88, 91, 92) échangées peuvent être modifiées.

8. Système de communication (1 ; 30 ; 40 ; 60 ; 70 ; 80 ; 100) selon l'une des revendications précédentes, **caractérisé par** un analyseur de situation qui est lié à un dispositif de détection (104, 105) pour détecter un état d'un véhicule et/ou un état d'un conducteur et/ou une situation de conduite du véhicule ainsi qu'une unité de priorité des informations de priorité pouvant être associées aux informations (20 ; 35 ; 52 ; 88, 91, 92) et/ou aux éléments de filtrage (61-67 ; 89, 90) au moyen de l'unité de priorité en fonction de l'état du véhicule et/ou de l'état du conducteur et/ou de la situation de conduite du véhicule et/ou d'une action qui doit être déclenchée au moyen des informations (20 ; 35 ; 52 ; 88, 91, 92).

9. Système de communication (1 ; 30 ; 40 ; 60 ; 70 ; 80 ; 100) selon l'une des revendications précédentes, **caractérisé en ce que** le filtre (15 ; 51) comprend en plus un filtre central.

10. Système de communication (1 ; 30 ; 40 ; 60 ; 70 ; 80 ; 100) selon l'une des revendications précédentes, **caractérisé en ce que** l'élément de réglage (48) comprend des règles qui englobent une prémisse et une mesure, la prémisse comprenant à chaque fois une condition logique et une unité d'inférence (50, 87) ne permettant d'interpréter que les règles de l'élément de réglage (48) dans la prémisse desquelles est interprétée l'une des variables d'état qui sont liées à la modification de l'état du système de communication (1 ; 30 ; 40 ; 60 ; 70 ; 80 ; 100).

11. Système de communication (1 ; 30 ; 40 ; 60 ; 70 ; 80 ; 100) selon l'une des revendications précédentes, **caractérisé en ce que** la mesure d'une règle, lorsque la prémisse est réalisée, est la possibilité d'effectuer une modification des éléments de filtrage (61-67 ; 89, 90).

12. Système de communication (1 ; 30 ; 40 ; 60 ; 70 ; 80 ; 100) selon l'une des revendications précédentes, **caractérisé en ce que** la modification des éléments de filtrage (61-67 ; 89, 90) comprend un échange d'informations (20 ; 35 ; 52 ; 88, 91, 92).

13. Procédé de communication contextuel (110) conçu pour échanger des informations (20 ; 35 ; 52 ; 88, 91, 92) entre plusieurs composants (2, 3 ; 31, 32 ; 41-44 ; 81-85 ; 101-106) liés, l'échange d'informations (20 ; 35 ; 52 ; 88, 91, 92) étant restreint par un circuit logique (14), comprenant les étapes suivantes :
vérification des informations (20 ; 35 ; 52 ; 88, 91, 92) à échanger par rapport au circuit logique (14) afin de restreindre l'échange des informations (20 ; 35 ; 52 ; 88, 91, 92) conformément au circuit logique (14), le circuit logique (14) étant modifié en fonction d'un état du système de communication (1 ; 30 ; 40 ; 60 ; 70 ; 80 ; 100),
et échange des informations sous réserve que l'échange soit autorisé et sinon l'échange est empêché,
le circuit logique (14) étant réalisé sous la forme d'un filtre (15 ; 51) doté d'un ou plusieurs éléments de filtrage (61-67 ; 89, 90), les éléments de filtrage (61-67 ; 89, 90) déterminant la restriction d'échange des informations (20 ; 35 ; 52 ; 88, 91, 92),
**caractérisé en ce que**
la vérification des informations (20 ; 35 ; 52 ; 88, 91, 92) à échanger par rapport au circuit logique (14) étant réalisée dans des filtres de composant (16, 17 ; 72, 73) disposés de manière décentralisée dans les composants individuels (2, 3 ; 31, 32 ; 41-44 ; 81-85 ; 101-106) et qui sont inclus dans le filtre (15 ; 51) du circuit logique (14).

14. Procédé de communication (1 ; 30 ; 40 ; 60 ; 70 ; 80 ; 100) selon la revendication 13, **caractérisé en ce qu'**au moins un filtre (15, 51) comprend un élément de filtrage (61-67 ; 89, 90) qui autorise ou interdit l'échange d'informations en fonction d'un contenu de l'information, le cas échéant en plus en fonction de l'indication d'origine et/ou de l'indication de la destination de l'information.

15. Procédé de communication (110) selon la revendication 13 ou 14, **caractérisé en ce que** les informations sont échangées sous la forme de messages et les messages comprennent à chaque fois une indication d'origine, une indication de destination et un contenu des informations et que lors de la vérification des informations (20 ; 35 ; 52 ; 88, 91, 92) à échanger par rapport au circuit logique (14), il est déterminé si un échange des informations doit être autorisé ou interdit conformément au circuit logique et les informations sont échangées sous réserve que l'échange soit autorisé, sinon l'échange est empêché.

16. Procédé de communication (110) selon l'une des revendications 13 à 15, **caractérisé en ce que** le circuit logique (14) comprend un élément de réglage (48) au moyen duquel les éléments de filtrage (61-67 ; 89, 90) du filtre (15 ; 51) sont modifiés en fonction de l'état du système de communication (1 ; 30 ; 40 ; 60 ; 70 ; 80 ; 100).

17. Procédé de communication (110) selon l'une des revendications 13 à 16, **caractérisé en ce que** les informations (20 ; 35 ; 52 ; 88, 91, 92) échangées influencent l'état du système de communication (1 ; 30 ; 40 ; 60 ; 70 ; 80 ; 100).

18. Procédé de communication (110) selon l'une des revendications 13 à 17, **caractérisé en ce que** les informations (20 ; 35 ; 52 ; 88, 91, 92) sont échangées sous la forme de messages entre les composants (2, 3 ; 31, 32 ; 41-44 ; 81-85 ; 101-106).

19. Procédé de communication (110) selon l'une des revendications 13 à 18, **caractérisé en ce que** le filtre (15 ; 51) comprend au moins un élément de filtrage actif (61-67 ; 89, 90) à l'aide duquel les informations (20 ; 35 ; 52 ; 88, 91, 92) échangées sont modifiées.

20. Procédé de communication (110) selon l'une des revendications 13 à 19, **caractérisé en ce qu'**un état d'un véhicule et/ou un état d'un conducteur et/ou une situation de conduite du véhicule est détecté au moyen d'un dispositif de détection (104, 105) et des informations de priorité sont à chaque fois associées aux informations (20 ; 35 ; 52 ; 88, 91, 92) échangées et/ou aux éléments de filtrage (61-67 ; 89, 90) au moyen d'une unité de priorité d'un analyseur de situation en fonction de l'état du véhicule et/ou de l'état du conducteur et/ou de la situation de conduite du véhicule et/ou d'une action qui doit être déclenchée au moyen des informations (20 ; 35 ; 52 ; 88, 91, 92) échangées.

21. Procédé de communication (110) selon la revendication 20, **caractérisé en ce que** les informations de priorité sont déterminées au moyen d'une matrice de priorité à quatre dimensions dont les éléments dépendent de l'état du véhicule, de l'état du conducteur, de la situation de conduite et de l'action à exécuter.

22. Procédé de communication (110) selon la revendication 20 ou 21, **caractérisé en ce que** les valeurs de priorité dans la matrice de priorité sont modifiées avec restriction ou sans restriction dans le temps en conséquence d'une entrée détectée du conducteur.

23. Procédé de communication (110) selon l'une des revendications 13 à 22, **caractérisé en ce que** la vérification des informations (20 ; 35 ; 52 ; 88, 91, 92) à échanger par rapport au circuit logique (14) est effectuée au moins partiellement en plus dans un filtre central.

24. Procédé de communication (110) selon l'une des revendications 13 à 23, **caractérisé en ce qu'**un analyseur d'état (46 ; 86) représente l'état du système de communication (1 ; 30 ; 40 ; 60 ; 70 ; 80 ; 100), les informations (20 ; 35 ; 52 ; 88, 91, 92) échangées pouvant être analysées au moyen de l'analyseur d'état (46 ; 86) et des variables d'état pouvant être définies ou modifiées au moyen du contenu des informations (20 ; 35 ; 52 ; 88, 91, 92) échangées, l'ensemble des variables d'état caractérisant l'état du système de communication (1 ; 30 ; 40 ; 60 ; 70 ; 80 ; 100).

25. Procédé de communication (110) selon l'une des revendications 13 à 24, **caractérisé en ce qu'**en cas de modification de l'état du système, les éléments de filtrage (61-67 ; 89, 90) sont modifiés au moyen d'une unité d'inférence (50, 87) à l'aide de l'élément de réglage (48).

26. Procédé de communication (110) selon l'une des revendications 13 à 25, **caractérisé en ce que** l'élément de réglage (48) comprend des règles qui englobent une prémisse et une mesure, la prémisse comprenant à chaque fois une condition logique et une unité d'inférence (50, 87) ne permettant d'interpréter que les règles de l'élément de réglage (48) dans la prémisse desquelles est interprétée l'une des variables d'état qui sont liées à la modification de l'état du système de communication (1 ; 30 ; 40 ; 60 ; 70 ; 80 ; 100), et la mesure qui provoque une modification des éléments de filtrage (61-67 ; 89, 90) est exécutée lorsque la prémisse est réalisée.

27. Procédé de communication (110) selon l'une des revendications 13 à 26, **caractérisé en ce que** pour modifier les éléments de filtrage (61-67 ; 89, 90), des informations (20 ; 35 ; 52 ; 88, 91, 92) sont communiquées aux filtres de composant (16, 17 ; 72, 73) disposés de manière décentralisée dans les composants (2, 3 ; 31, 32 ; 41-44 ; 81-85 ; 101-106).

28. Composants (2, 3 ; 31, 32 ; 41-44 ; 81-85 ; 101-106) pour un système de communication contextuel (1 ; 30 ; 40 ; 60 ; 70 ; 80 ; 100) selon la revendication 1 pour échanger des informations (20 ; 35 ; 52 ; 88, 91, 92) avec d'autres composants (2, 3 ; 31, 32 ; 41-44 ; 81-85 ; 101-106) du système de communication (1 ; 30 ; 40 ; 60 ; 70 ; 80 ; 100) comprenant une unité d'émission/réception pour émettre et/ou recevoir des informations (20 ; 35 ; 52 ; 88, 91, 92),
une unité logique locale pour vérifier les informations (20 ; 35 ; 52 ; 88, 91, 92) à émettre et/ou à recevoir par rapport à un circuit logique (14), l'unité logique étant conçue pour restreindre l'échange des informations (20 ; 35 ; 52 ; 88, 91, 92) avec les autres composants (2, 3 ; 31, 32 ; 41-44 ; 81-85 ; 101-106) conformément à la vérification par rapport au circuit logique (14),
le circuit logique (14) pouvant être modifié en fonction d'un état du système de communication (1 ; 30 ; 40 ; 60 ; 70 ; 80 ; 100), le circuit logique (14) dans l'unité logique étant réalisé sous la forme d'un filtre (15 ; 51) doté d'un ou plusieurs éléments de filtrage (61-67 ; 89, 90) et les éléments de filtrage (61-67 ; 89, 90) déterminant la restriction d'échange des informations (20 ; 35 ; 52 ; 88, 91, 92).

29. Composants (2, 3 ; 31, 32 ; 41-44 ; 81-85 ; 101-106) selon la revendication 28, **caractérisés en ce qu'**au moins l'un des éléments de filtrage (61-67 ; 89, 90) est conçu pour autoriser ou pour interdire l'échange d'informations en fonction d'un contenu de l'information, le cas échéant en plus en fonction de l'indication d'origine et/ou de l'indication de la destination de l'information.

30. Composants (2, 3 ; 31, 32 ; 41-44 ; 81-85 ; 101-106) selon la revendication 28 ou 29, **caractérisés en ce que** les informations sont échangées sous la forme de messages et les messages comprennent à chaque fois une indication d'origine, une indication de destination et un contenu des informations et la restriction de l'échange comprend un contrôle des messages pour déterminer s'il existe une autorisation ou une interdiction d'échange des messages.

31. Composants (2, 3 ; 31, 32 ; 41-44 ; 81-85 ; 101-106) selon l'une des revendications 28 à 30, **caractérisés en ce que** le circuit logique (14) peut être modifié en modifiant les éléments de filtrage (61-67 ; 89, 90).

32. Composants (2, 3 ; 31, 32 ; 41-44 ; 81-85 ; 101-106) selon l'une des revendications 28 à 31, **caractérisés en ce que** les informations (20 ; 35 ; 52 ; 88, 91, 92) nécessaires pour la modification des éléments de filtrage (61-67 ; 89, 90) peuvent être reçues sous la forme d'informations (20 ; 35 ; 52 ; 88, 91, 92) échangées.
